# EUROPÄISCHE PATENTSCHRIFT

(11) **EP 2 972 480 B1**
(45) Veröffentlichungstag und Bekanntmachung des Hinweises auf die Patenterteilung: **29.04.2020**
(21) Anmeldenummer: 14709296.9
(22) Anmeldetag: 11.03.2014
(51) Int. Cl.: E05F 15/43, G01S 17/93, E05C 17/00

(54) **KOLLISIONSSCHUTZVORRICHTUNG FÜR EINE SCHWENKBARE KLAPPE EINES KRAFTFAHRZEUGS, KLAPPE, KRAFTFAHRZEUG UND ENTSPRECHENDES VERFAHREN**
COLLISION PROTECTION DEVICE FOR A PIVOTABLE HATCH OF A MOTOR VEHICLE, HATCH, MOTOR VEHICLE AND CORRESPONDING METHOD
DISPOSITIF DE PROTECTION ANTI-COLLISION POUR UN HAYON PIVOTANT D'UN VÉHICULE AUTOMOBILE, HAYON, VÉHICULE AUTOMOBILE ET PROCÉDÉ CORRESPONDANT

(30) Priorität: 14.03.2013 DE 102013102608
(43) Veröffentlichungstag der Anmeldung: 20.01.2016
(73) Patentinhaber: Valeo Schalter und Sensoren GmbH, 74321 Bietigheim-Bissingen (DE); Audi AG, 85045 Ingolstadt (DE)
(72) Erfinder: WARSCHAT, Ulf, 85652 Pliening (DE); HARTMANN, Jürgen, 91468 Gutenstetten (DE); SCHULER, Thomas, 74321 Bietigheim-Bissingen (DE)
(74) Vertreter: Hofstetter, Schurack & Partner
(86) Internationale Anmeldenummer: PCT/EP2014/054725
(87) Internationale Veröffentlichungsnummer: WO 2014/140028

(56) Entgegenhaltungen:
- DE-A1- 19 955 249
- DE-A1-102004 062 370
- DE-A1-102006 044 794
- DE-A1-102008 029 223
- DE-A1-102008 030 611
- DE-B3-102007 014 034
- DE-U1-202010 017 197
- US-A1- 2005 242 618
- US-A1- 2010 076 651
- US-A1- 2011 295 469

## Beschreibung

Die Erfindung betrifft eine Kollisionsschutzvorrichtung für eine schwenkbare Klappe eines Kraftfahrzeugs, mit zumindest einem Sensor zur Detektion eines Hindernisses in einem Schwenkbereich der Klappe, und mit einer elektronischen Steuereinrichtung, die dazu ausgelegt ist, abhängig von Sensorsignalen des zumindest einen Sensors Steuerbefehle zum Anhalten einer Öffnungsbewegung der Klappe auszugeben. Die Erfindung betrifft außerdem eine Klappe für ein Kraftfahrzeug, ein Kraftfahrzeug mit einer Klappe sowie ein entsprechendes Verfahren zur Vermeidung einer Kollision einer schwenkbaren Klappe mit einem Hindernis.

Derartige Kollisionsschutzvorrichtungen, welche zur Vermeidung von Kollisionen einer schwenkbaren Klappe eines Kraftfahrzeugs mit Hindernissen dienen, sind bereits Stand der Technik. Das Interesse richtet sich vorliegend insbesondere auf eine Heckklappe eines Personenkraftwagens, beispielsweise eines Kombinationskraftwagens. Es ist bereits bekannt, eine solche Heckklappe mit Sensoren auszugestalten, welche zur Detektion von Hindernissen in dem Schwenkbereich bzw. dem Öffnungsbereich der Klappe während einer Öffnungsbewegung ausgebildet sind. So offenbart beispielsweise das Dokument DE 10 2008 029 223 A1 ein Fahrzeug mit einer schwenkbaren Heckklappe, welche mittels einer Steuer- und Antriebseinheit automatisch geöffnet werden kann. Eine Sensoreinheit detektiert Hindernisse im Schwenkbereich der Klappe, und das Öffnen der Heckklappe kann gestoppt werden, wenn ein Hindernis vor dem vollständigen Öffnen erkannt wird. Die Sensoreinheit ist dabei in eine Leuchte der Klappe integriert.

Eine weitere Kollisionsschutzvorrichtung der eingangs genannten Gattung ist aus der DE 10 2004 062 370 A1 bekannt. Hier sind eine Sendeeinrichtung und eine Empfangseinrichtung an der Heckklappe derart angeordnet, dass sich eine von der Strahlung der Sendeeinrichtung eingenommene Abstrahlfläche im Wesentlichen parallel und vollständig über die Fläche der Heckklappe legt. Mit anderen Worten weist die Sendeeinrichtung eine Senderichtung bzw. Erfassungsrichtung auf, die im Wesentlichen parallel zu der Heckklappe verläuft.

Im Gegenstand gemäß Druckschrift DE 102 35 925 A1 ist der Sensor derart im oberen Bereich der Heckklappe angeordnet, dass er einen schräg nach unten gerichteten Erfassungsbereich aufweist.

Zur Detektion eines Hindernisses im Schwenkbereich der Heckklappe werden im Stand der Technik üblicherweise separate Sensoren eingesetzt, welche ausschließlich zu diesem Zwecke verwendet werden. Eine solche Lösung ist jedoch mit Nachteilen hinsichtlich der Kosten und des wertvollen Bauraums verbunden. In der EP 0 968 863 A1 wird deshalb vorgeschlagen, zur Detektion von Hindernissen während der Öffnungsbewegung der Heckklappe Ultraschallsensoren zu verwenden, die zu einer Einparkhilfe des Fahrzeugs gehören. Diese Ultraschallsensoren unterstützen den Fahrer beim Durchführen von Parkmanövern mit dem Fahrzeug und dienen außerdem zur Detektion von Hindernissen im Schwenkbereich der Heckklappe. Als nachteilig an diesem Stand der Technik ist jedoch der Umstand anzusehen, dass die Ultraschallsensoren typischerweise nicht an der Heckklappe, sondern an einem Stoßfänger angeordnet sind. Bei den meisten Fahrzeugen können die Ultraschallsensoren somit nicht dazu genutzt werden, um zusätzlich noch Hindernisse im Schwenkbereich der Heckklappe zu erfassen. Aus der DE 10 2006 044 794 A1 ist ein fahrzeugbasiertes Lidar-System bekannt.

Darüber hinaus ist aus der US 2011/295469 A1, DE102004062370A1 und DE102008029223A1 eine Ausgestaltung bekannt, bei welcher mit einem Sensor in einem Heckbereich eines Fahrzeugs der Schwenkbereich der Klappe erfasst werden kann.

Darüber hinaus ist aus der US 2005/242618 A1 ein Sensorsystem für ein Kraftfahrzeug bekannt, bei welchem beim Öffnen einer Tür eine Erfassung stattfinden kann.

Darüber hinaus ist aus der US 2010/076651 A1 eine Vorrichtung bekannt, die zum Überwachen eines Türbereichs eines Fahrzeugs ausgebildet ist. Die Vorrichtung umfasst auch einen Laserscanner.

Der Einsatz eines multifunktionalen Sensors ist des Weiteren aus der
DE 10 2007 049 256 A1 bekannt. Hier wird ein Sensor verwendet, der an einer Heckklappe derart angeordnet und ausgerichtet ist, dass Partikel auf der Heckklappe durch Erfassung eines an den Partikeln rückgestreuten Lichtanteils detektiert werden können. Somit lässt sich mittels des Sensors einerseits ein Niederschlag detektieren. Andererseits wird der Sensor auch dazu verwendet, Hindernisse im Schwenkbereich der Heckklappe während einer Öffnungsbewegung zu erfassen und die Öffnungsbewegung gegebenenfalls anzuhalten. Die Erfassungsrichtung des Sensors verläuft dabei parallel zur Ebene der Heckklappe bzw. parallel zur Scheibenebene. Gerade dadurch können auf der Scheibenebene befindliche Wassertropfen zuverlässig detektiert werden. Eine solche Anordnung des Sensors ist jedoch für die Funktion des Kollisionsschutzes der Heckklappe nur bedingt geeignet. Mit diesem Sensor ist die genaue Erfassung des Abstandes zum Hindernis während der Öffnungsbewegung der Heckklappe nicht möglich, und die Öffnungsbewegung kann erst dann angehalten werden, wenn das Hindernis in den Erfassungsbereich des Sensors gelangt, der jedoch eine sehr geringe Höhe über der Scheibenebene aufweist. Es kann somit nicht stets gewährleistet werden, dass die Heckklappe noch rechtzeitig vor der Kollision mit dem Hindernis angehalten wird.

Es ist Aufgabe der Erfindung, eine Lösung aufzuzeigen, wie bei einer Kollisionsschutzvorrichtung der eingangs genannten Gattung ein wirkungsvoller und zuverlässiger Kollisionsschutz für die schwenkbare Klappe des Kraftfahrzeugs ohne viel Aufwand ermöglicht werden kann.

Diese Aufgabe wird erfindungsgemäß durch eine Kollisionsschutzvorrichtung, durch eine Klappe, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Kollisionsschutzvorrichtung für eine schwenkbare Klappe eines Kraftfahrzeugs umfasst zumindest einen Sensor zur Detektion eines Hindernisses in einem Schwenkbereich der Klappe sowie eine elektronische Steuereinrichtung, welche abhängig von Sensorsignalen des Sensors Steuerbefehle ausgeben kann, welche ein Anhalten einer Öffnungsbewegung der Klappe bewirken. Der zumindest eine Sensor ist ein optischer Sichtweitensensor, der im Betrieb des Fahrzeugs auch zur Erfassung einer optischen Sichtweite in der Umgebung verwendet wird.

Die Erfindung basiert auf mehreren Erkenntnissen: Sie beruht zunächst auf der Erkenntnis, dass bei manchen aus dem Stand der Technik bekannten Kollisionsschutzvorrichtungen separate Sensoren eingesetzt werden, die ausschließlich die Funktion des Kollisionsschutzes der Klappe aufweisen. Bei derartigen Vorrichtungen ist zwar stets ein sicheres und kollisionsfreies Öffnen der Klappe gewährleistet, jedoch sind derartige Vorrichtungen mit Nachteilen hinsichtlich der Kosten und des Bauraums verbunden, weil zusätzliche Komponenten eingesetzt werden müssen. Eine weitere Erkenntnis besteht darin, dass die im Stand der Technik vorgeschlagenen multifunktionalen Vorrichtungen, welche bereits vorhandene Sensoren zusätzlich auch für die Funktion des Kollisionsschutzes der Klappe nutzen, für die vorgeschlagene Kollisionsschutzfunktion nur bedingt geeignet sind, weil entweder Ultraschallsensoren verwendet werden, die typischerweise nicht an der Klappe angebracht sind, oder optische Sensoren genutzt werden, bei denen eine zuverlässige Erfassung eines Hindernisses im

Schwenkbereich der Klappe aufgrund der Erfassungsrichtung des Sensors nicht möglich ist. Die Erfindung baut schließlich auf der Erkenntnis auf, dass die Nachteile des Stands der Technik dadurch umgangen werden können, dass für die Kollisionsschutzfunktion ein Sensor verwendet wird, der zusätzlich auch zur Erfassung der optischen Sichtweite in der Umgebung des Kraftfahrzeugs genutzt wird. Die Erfindung macht sich dabei die Tatsache zunutze, dass solche Sichtweitensensoren üblicherweise an der Heckklappe montiert werden, und zwar in der Regel hinter der Abdeckung einer Heckleuchte. In vorteilhafter Weise kann somit ein derartiger Sichtweitensensor auch zur Erfassung von Hindernissen während einer Öffnungsbewegung der Klappe genutzt werden, um gegebenenfalls die Öffnungsbewegung anzuhalten und somit eine Kollision der Klappe mit dem Hindernis zu vermeiden. Um die aktuelle optische Sichtweite messen zu können, sind diese Sensoren insbesondere so ausgerichtet, dass die Erfassungsrichtung im Wesentlichen horizontal und somit im Wesentlichen unter einem rechten Winkel zur Klappe verläuft. Einerseits kann somit der Abstand zum Hindernis besonders zuverlässig erfasst und die Öffnungsbewegung der Klappe gegebenenfalls wirkungsvoll gestoppt werden; andererseits wird ein bereits für andere Zwecke vorhandener Sensor verwendet, so dass sich der Einsatz eines separaten Sensors mit den damit verbundenen Nachteilen erübrigt.

Unter dem Begriff "Sichtweite" wird vorliegend insbesondere eine meteorologische Sichtweite verstanden, d.h. die größte horizontale Entfernung, bei welcher ein Objekt gerade noch durch eine Person erkannt werden kann. Diese Sichtweite kann insbesondere durch atmosphärische Effekte bzw. atmosphärische Bestandteile beeinflusst werden, wie beispielsweise Nebel, Schneefall und dergleichen. Andererseits kann die Sichtweite auch durch eine Luftverschmutzung beeinflusst werden, welche eine zusätzliche Lichtdämpfung im Sichtbaren Spektralbereich verursacht.

Der Sichtweitensensor misst die Sichtweite auf optischem Wege. Dies bedeutet, dass der Sensor optische Signale, insbesondere Infrarotsignale, aussenden und in der Umgebung reflektierte Sendesignale wieder als Empfangssignale empfangen kann. Die Sichtweite wird dann vorzugsweise in Abhängigkeit von einem Reflexionsvermögen und/oder in Abhängigkeit von der Laufzeit der ausgesendeten Signale bestimmt.

Bevorzugt ist die Steuereinrichtung zur automatischen Steuerung der Öffnungsbewegung unter Abgabe entsprechender Steuersignale an einen Aktor ausgebildet. Dies bedeutet, dass die Steuereinrichtung die Öffnungsbewegung der Klappe automatisch steuern kann, so dass die Klappe nicht manuell durch den Benutzer, sondern automatisch mittels der elektronischen Steuereinrichtung und des Aktors zu öffnen ist. Der Aktor treibt dabei die Klappe an, während die Steuereinrichtung den Aktor ansteuert. Der Aktor kann beispielsweise ein elektrischer Antriebsmotor sein. Die Steuerung der Öffnungsbewegung kann beispielsweise derart erfolgen, dass die Steuereinrichtung die Klappe dann automatisch öffnet, wenn der Benutzer ein entsprechendes Bedienelement betätigt und/oder eine authentifizierte Person im Bereich der Klappe detektiert wird, beispielsweise mit Hilfe einer Kamera oder dergleichen. Der Benutzer braucht somit die Klappe nicht manuell und somit per Hand zu öffnen, sondern die Öffnungsbewegung wird automatisch mittels des Aktors durchgeführt.

Bevorzugt erfasst der Sensor einen Abstand zu dem Hindernis. Die Steuereinrichtung kann die Steuerbefehle zum Anhalten der Öffnungsbewegung dann ausgeben, wenn der Abstand einen vorgegebenen Grenzwert unterschreitet. Eine solche Vorgehensweise ermöglicht ein rechtzeitiges Anhalten und somit ein kollisionsfreies und sicheres Öffnen der Klappe. Wird der Grenzwert wieder überschritten, kann die Öffnungsbewegung der Klappe wieder fortgesetzt und die Klappe vollständig und kollisionsfrei geöffnet werden.

Es erweist sich des Weiteren als vorteilhaft, wenn die Steuereinrichtung abhängig von Sensorsignalen des Sensors ein akustisches und/oder optisches Warnsignal mittels einer entsprechenden Ausgabeeinrichtung ausgibt. Somit kann ein unnötiges längeres Anhalten der Klappe vermieden werden, wenn sich beispielsweise eine Person im Schwenkbereich der Klappe befindet und die Öffnungsbewegung der Klappe verhindert. Diese Person wird nun mit dem Warnsignal darauf hingewiesen, dass sie im Bereich der Klappe steht und ein kollisionsfreies Öffnen der Klappe somit nicht möglich ist. Andererseits kann der Fahrer durch Ausgabe eines Warnsignals gegebenenfalls auch wirkungsvoll darauf hingewiesen werden, dass sich ortsfeste Hindernisse im Öffnungsbereich der Klappe befinden und das Fahrzeug beispielsweise umgeparkt werden soll.

Dabei kann auch vorgesehen sein, dass in der Steuereinrichtung ein erster Grenzwert und ein höherer zweiter Grenzwert für den Abstand abgelegt sind. Wird der höhere zweite Grenzwert unterschritten, kann das optische und/oder akustische Warnsignal ausgegeben werden. Wird zusätzlich noch der erste Grenzwert unterschritten, so kann die Öffnungsbewegung der Klappe gestoppt werden, um die Kollision zu verhindern. Auf diese Art und Weise kann gegebenenfalls ein unnötiges Anhalten der Klappe vermieden werden, weil zwischen dem Zeitpunkt der Ausgabe des Warnsignals und dem Zeitpunkt des Anhaltens der Klappe eine gewisse Zeitspanne verstreichen wird, während welcher der Schwenkbereich der Klappe freigegeben werden kann.

Wird die Öffnungsbewegung der Klappe angehalten, so wird dem Benutzer vorzugsweise jederzeit die Möglichkeit gegeben, die Öffnungsbewegung wieder fortzusetzen. Die Steuereinrichtung kann diesbezüglich eine Eingabe empfangen, die der Benutzer an einer Bedieneinrichtung - beispielsweise an einer Fernbedienung bzw. einem Fahrzeugschlüssel - vornimmt, und nach Empfangen dieser Eingabe kann die Steuereinrichtung die zuvor angehaltene Öffnungsbewegung der Klappe unmittelbar aufgrund der Eingabe des Benutzers fortsetzen, und zwar insbesondere unabhängig von den aktuellen Sensorsignalen. Ein Anhalten der Öffnungsbewegung der Klappe gegen den Willen des Benutzers wird somit verhindert.

Wie bereits ausgeführt, kann der Sensor ein Infrarotsensor sein. Der Sensor weist einen Infrarotsender und zumindest einen Infrarotempfänger auf. Der Infrarotsender dient zum Aussenden von Infrarotsignalen in die Umgebung des Kraftfahrzeugs; der Infrarotempfänger dient wiederum zum Empfangen von in der Umgebung reflektierten Sendesignalen. Der Infrarotsender und der Infrarotempfänger können in einem gemeinsamen Sensorgehäuse angeordnet sein, so dass der Sensor insgesamt eine sehr kompakte Einheit bildet. Bevorzugt wird der Infrarotsender gepulst betrieben und sendet somit eine Sequenz von Infrarotimpulsen aus. Der Infrarotempfänger kann wiederum als Fotodiode ausgebildet sein. Der Sensor beinhaltet eine interne Recheneinheit, welche zur Auswertung der empfangenen Infrarotsignale und zur Bestimmung der optischen Sichtweite abhängig von den empfangenen Infrarotsignalen ausgebildet ist.

Die Erfindung betrifft außerdem eine Klappe für ein Kraftfahrzeug, welche eine erfindungsgemäße Kollisionsschutzvorrichtung aufweist.

Bevorzugt ist an der Klappe zumindest ein Teil einer Leuchte, insbesondere einer Heckleuchte, des Kraftfahrzeugs angeordnet. Dann kann der Sensor in das klappenseitige Teil der Leuchte integriert und hierbei hinter einer Abdeckung der Leuchte angeordnet sein. Eine solche Integration des Sensors in die Leuchte sorgt einerseits für einen zuverlässigen Schutz des Sensors vor äußeren Umwelteinflüssen und andererseits auch für ein optisch ansprechendes Erscheinungsbild der Klappe, weil der Sensor hinter der Abdeckung versteckt angeordnet ist. Außerdem ist somit eine Hinderniserfassung in Richtung senkrecht zur Klappenebene bzw. zur Abdeckung gewährleistet, so dass Hindernisse im Schwenkbereich der Klappe zuverlässig detektiert werden können, ohne dass die Funktion der Sichtweitenmessung beeinträchtigt wird.

Bevorzugt ist die Klappe eine Heckklappe des Kraftfahrzeugs. Es ist nämlich üblicherweise die Heckklappe, welche automatisch geöffnet werden kann und somit einer erhöhten Kollisionsgefahr mit einer Decke oder anderen Hindernissen ausgesetzt ist.

Der Sensor weist vorzugsweise eine Erfassungsrichtung auf, welche unter einem Winkel von 80°bis 100°zu einer Oberfläche der Klappe, in sbesondere zu der Abdeckung der Leuchte, verläuft. Insbesondere kann auch vorgesehen sein, dass die Erfassungsrichtung des Sensors senkrecht zur Klappenebene und/oder zur Abdeckung der Leuchte verläuft. Somit kann der Abstand zu Hindernissen besonders präzise erfasst und die Öffnungsbewegung gegebenenfalls rechtzeitig angehalten werden.

Ein erfindungsgemäßes Kraftfahrzeug, insbesondere ein Personenkraftwagen, umfasst eine erfindungsgemäße Klappe.

Ein erfindungsgemäßes Verfahren dient zur Vermeidung einer Kollision einer schwenkbaren Klappe eines Kraftfahrzeugs mit einem Hindernis während einer Öffnungsbewegung der Klappe, wobei mittels zumindest eines Sensors das Hindernis in einem Schwenkbereich der Klappe detektiert wird und abhängig von Sensorsignalen des Sensors Steuerbefehle zum Anhalten der Öffnungsbewegung der Klappe mittels einer Steuereinrichtung ausgegeben werden, und wobei die Sensorsignale mittels eines optischen Sichtweitensensors bereitgestellt werden, der während der Fahrt des Fahrzeugs zur Erfassung einer optischen Sichtweite in einer Umgebung des Kraftfahrzeugs verwendet wird.

Die mit Bezug auf die erfindungsgemäße Kollisionsschutzvorrichtung vorgestellten bevorzugten Ausführungsformen und deren Vorteile gelten entsprechend für die erfindungsgemäße Klappe, für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung eine Heckansicht eines Kraftfahrzeugs gemäß einer Ausführungsform der Erfindung;
- Fig. 2: in schematischer Darstellung einen Sichtweitensensor; und
- Fig. 3: ein Blockdiagramm einer Kollisionsschutzvorrichtung gemäß einer Ausführungsform der Erfindung.

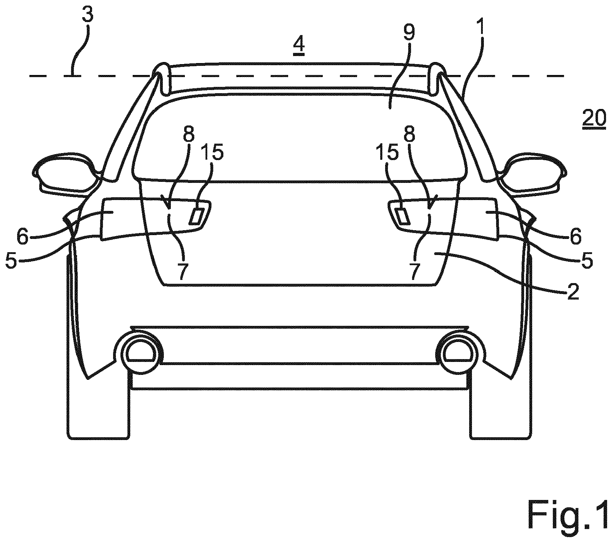

Ein in Fig. 1 gezeigtes Kraftfahrzeug 1 ist beispielsweise ein Kombinationskraftwagen oder kurz Kombi. Das Kraftfahrzeug 1 weist in bekannter Weise eine Heckklappe 2 auf, welche um eine horizontal verlaufende Schwenkachse 3 schwenkbar an Karosserieteilen des Kraftfahrzeugs 1 gelagert ist. Die Heckklappe 2 weist einen Schwenkbereich 4 auf, welcher so definiert ist, dass während einer Öffnungsbewegung der Heckklappe 2 es nur dann zu einer Kollision mit einem Hindernis kommen kann, wenn sich das Hindernis in dem Schwenkbereich 4 befindet. Der Schwenkbereich 4 ist somit fest bezüglich des Kraftfahrzeugs 1 vorgegeben.

In bekannter Weise weist das Kraftfahrzeug 1 eine linke und eine rechte Heckleuchte 5 auf. Die Heckleuchten 5 sind jeweils in zwei Teile unterteilt, nämlich ein ortsfestes bzw. karosseriefestes Teil 6 sowie ein klappenseitiges Teil 7, das an der Heckklappe 2 angeordnet ist. Das ortsfeste Teil 7 ist hingegen außerhalb der Heckklappe 2 an dem Kraftfahrzeug 1 angeordnet.

Jede Heckleuchte 5 weist in bekannter Weise auch eine Abdeckung 8 auf, welche beispielsweise aus einem lichttransparenten bzw. lichtdurchlässigen Material, beispielsweise aus Kunststoff, gebildet ist und die Lichtquellen verdeckt bzw. schützt. Die jeweiligen Lichtquellen sind dabei hinter der Abdeckung 8 verdeckt angeordnet.

In die Heckklappe 2 kann des Weiteren in bekannter Weise eine Heckscheibe 9 integriert sein.

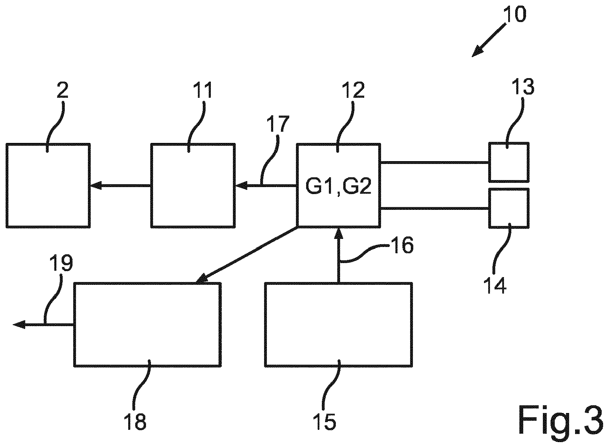

Die Heckklappe 2 kann automatisch mit Hilfe eines Aktors bzw. eines Antriebsmotors geöffnet werden. Bezug nehmend nun auf Fig. 3, in welcher ein Blockschaltbild einer Kollisionsschutzvorrichtung 10 dargestellt ist, wird die Heckklappe 2 mittels eines Aktors 11 angetrieben. Der Aktor 11 ist insbesondere ein elektrischer Motor. Der Aktor 11 wird mittels einer elektronischen Steuereinrichtung 12 angesteuert, welche beispielsweise als Mikrokontroller ausgebildet sein kann. Die Steuereinrichtung 12 empfängt Signale von einem Bedienelement 13 und kann in Reaktion auf eine Betätigung des Bedienelements 13 durch einen Benutzer ein automatisches Öffnen der Heckklappe 2 mittels des Aktors 11 veranlassen. Ergänzend oder alternativ kann die Steuereinrichtung 12 auch Signale von einer Erfassungseinrichtung 14, beispielsweise einer Kamera, empfangen, welche zur Detektion einer befugten Person im Bereich der Heckklappe 2 ausgebildet ist. Wird das Annähern der Person an die Heckklappe 2 detektiert, kann die Heckklappe 2 automatisch geöffnet werden.

Zur Kollisionsschutzvorrichtung 10 gehört außerdem ein Sensor 15, mittels welchem Hindernisse detektiert werden können, die sich in dem Schwenkbereich 4 der Heckklappe 2 befinden. Wird ein solches Hindernis während der Öffnungsbewegung der Heckklappe 2 detektiert, kann diese Öffnungsbewegung gestoppt werden, um eine Kollision zu verhindern. Vorzugsweise wird dabei ein Abstand 16 zwischen dem Sensor 15 und dem Hindernis gemessen und an die Steuereinrichtung 12 übermittelt. Erkennt die Steuereinrichtung 12, dass der Abstand 16 einen vorgegebenen Grenzwert unterschreitet, werden Steuerbefehle 17 an den Aktor 11 abgegeben, welche ein sofortiges Anhalten der Heckklappe 2 bewirken. Der Aktor 11 übernimmt hier die Bremsfunktion.

Optional kann die Steuereinrichtung 12 auch eine elektronische Ausgabeeinrichtung 18 ansteuern, welche einen Lautsprecher und/oder zumindest eine Lichtquelle umfassen kann. Nach Detektion des Hindernisses kann die Steuereinrichtung 12 die Ausgabeeinrichtung 18 zum Ausgeben eines optischen und/oder akustischen Warnsignals 19 ansteuern, um die im Bereich der Heckklappe 2 befindlichen Personen über das erkannte Hindernis entsprechend zu informieren.

In der Steuereinrichtung 12 können optional auch zwei verschiedene Grenzwerte G1, G2 für den gemessenen Abstand 16 abgelegt sein, wobei gilt: G2 > G1. Wird beispielsweise zunächst der zweite Grenzwert G2 unterschritten, wird die Ausgabeeinrichtung 18 zum Ausgeben des Warnsignals 19 angesteuert. Wird dann zusätzlich auch der erste Grenzwert G1 unterschritten, erfolgt die Ausgabe der Steuerbefehle 17 zum Anhalten der Öffnungsbewegung der Heckklappe 2.

Ein besonderes Interesse gilt nun der Ausgestaltung des Sensors 15, welcher als optischer Sichtweitensensor ausgebildet ist, der zur Messung der optischen bzw. meteorologischen Sichtweite (im vom Menschen sichtbaren Spektralbereich) in der Umgebung 20 des Kraftfahrzeugs 1 dient. Mit erneutem Bezug auf Fig. 1 ist ein derartiger Sensor 15 in zumindest eine der Heckleuchten 5 integriert, nämlich in das klappenseitige Teil 7 der Heckleuchte 5. Es können auch jeweilige Sensoren 15 sowohl in die linke als auch in die rechte Heckleuchte 5 integriert sein. Dabei ist der Sensor 15 hinter der jeweiligen Abdeckung 8 verdeckt angeordnet.

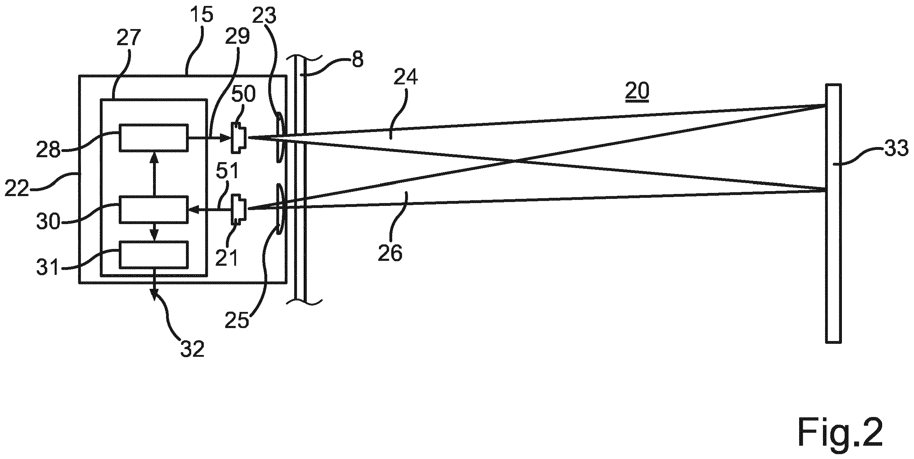

Wie ausgeführt, dient der Sensor 15 zur Messung der meteorologischen Sichtweite in der Umgebung 20 des Kraftfahrzeugs 1. Bezug nehmend nun auf Fig. 2 ist der Sensor 15 ein optischer Sensor mit einem Infrarotsender 50 und einem Infrarotempfänger 21, welche in einem Gehäuse 22 gehäusefest angeordnet sind. Der Infrarotsender 50 ist eine Infrarotdiode, während der Infrarotempfänger 21 als Fotodiode ausgebildet ist. Unter Verzicht auf bewegliche Spiegelelemente oder dergleichen befindet sich vor dem Infrarotsender 50 eine Sendelinse 23, welche zum Bündeln von Infrarotstrahlen 24 dient. Auch vor dem Infrarotempfänger 21 ist eine Empfangslinse 25 angeordnet, durch welche sich in der Umgebung 20 reflektierte Infrarotstrahlen 26 hindurch ausbreiten und auf den Infrarotempfänger 21 fokussiert werden.

Der Sensor 15 beinhaltet auch eine interne Recheneinheit 27, welche einerseits zur Ansteuerung des Infrarotsenders 50 und andererseits zur Auswertung eines von dem Infrarotempfänger 21 bereitgestellten Empfangssignals 51 ausgebildet ist. Das elektrische Empfangssignal 51 charakterisiert dabei die vom Empfänger 21 empfangenen Infrarotstrahlen 26. Die Recheneinheit 27 beinhaltet mehrere Funktionsblöcke: Ein erster Funktionsblock 28 gibt Steuersignale 29 an den Sender 50 ab und dient somit zur Ansteuerung des Senders 50. Der Sender 50 wird dabei gepulst betrieben, so dass er eine Sequenz von Infrarotpulsen aussendet. Mittels eines weiteren Funktionsblocks 30 wird in Abhängigkeit von dem elektrischen Empfangssignal 51 sowie unter Berücksichtigung der Steuersignale 29 ein Reflexionsvermögen, d.h. ein Verhältnis der Energie der empfangenen Infrarotstrahlen 26 zu den ausgesendeten Infrarotstrahlen 24 bestimmt, wie auch die Laufzeit der Infrarotstrahlen 24, 26. In Abhängigkeit von diesen Messgrößen wird dann in einem weiteren Funktionsblock 31 die Sichtweite bestimmt, welche beispielsweise in Metern angegeben wird. Die Information über die Sichtweite wird dann gemäß der Pfeildarstellung 32 ausgegeben und beispielsweise an ein Steuergerät des Kraftfahrzeugs 1 übermittelt. Dieses Steuergerät kann beispielsweise die Scheinwerfer und/oder die Heckleuchten 5 des Kraftfahrzeugs 1 in Abhängigkeit von der gemessenen Sichtweite automatisch ansteuern und hierbei z.B. auf Nebellicht umschalten. Gleichzeitig übermittelt die Recheneinheit 27 auch Informationen über den gemessenen Abstand 16 an die Steuereinrichtung 12.

Wird nun die Heckklappe 2 des Kraftfahrzeugs 1 automatisch mittels der Steuereinrichtung 12 geöffnet, so misst der Sensor 15 den Abstand 16 zu einem in Fig. 2 angedeuteten Hindernis 33. Die Steuereinrichtung 12 vergleicht dann den gemessenen Abstand 16 mit den abgelegten Grenzwerten G1, G2 und steuert dann gegebenenfalls die Ausgabeeinrichtung 18 an bzw. gibt die Steuerbefehle 17 an den Aktor 11 ab.

## Patentansprüche

1. Kollisionsschutzvorrichtung (10) für eine schwenkbare Klappe (2) eines Kraftfahrzeugs (1), mit zumindest einem Sensor (15) zur Detektion eines Hindernisses (33) in einem Schwenkbereich (4) der Klappe (2), und mit einer Steuereinrichtung (12), die dazu ausgelegt ist, abhängig von Sensorsignalen des zumindest einen Sensors (15) Steuerbefehle (17) zum Anhalten einer Öffnungsbewegung der Klappe (2) auszugeben,
**dadurch gekennzeichnet, dass**
der zumindest eine Sensor (15) ein optischer Sichtweitensensor ist, welcher einen Infrarotsender (50) und zumindest einen Infrarotempfänger (21) aufweist und welcher zusätzlich zur Detektion eines Hindernisses in dem Schwenkbereich (4) der Klappe (2) auch zur Erfassung einer optischen, d.h. meteorologischen Sichtweite in einer Umgebung (20) des Sensors (15) ausgebildet ist, wobei der Sensor (15) eine interne Recheneinheit beinhaltet, welche zur Auswertung der empfangenen Infrarotsignale und zur Bestimmung der optischen Sichtweite abhängig von den empfangenen Infrarotsignalen ausgebildet ist.

2. Kollisionsschutzvorrichtung (10) nach Anspruch 1,
**dadurch gekennzeichnet, dass**
die Steuereinrichtung (12) zur automatischen Steuerung der Öffnungsbewegung unter Abgabe von Steuersignalen an einen Aktor (11) ausgebildet ist.

3. Kollisionsschutzvorrichtung (10) nach Anspruch 1 oder 2,
**dadurch gekennzeichnet, dass**
der Sensor (15) zur Erfassung eines Abstands (16) zu dem Hindernis (33) ausgebildet ist und die Steuereinrichtung (12) dazu ausgelegt ist, die Steuerbefehle (17) zum Anhalten der Öffnungsbewegung dann auszugeben, wenn der Abstand (16) einen vorgegebenen Grenzwert (G1) unterschreitet.

4. Kollisionsschutzvorrichtung (10) nach einem der vorhergehenden Ansprüche,
**dadurch gekennzeichnet, dass**
die Steuereinrichtung (12) dazu ausgelegt ist, abhängig von Sensorsignalen des zumindest einen Sensors (15) ein akustisches und/oder optisches Warnsignal (19) mittels einer Ausgabeeinrichtung (18) auszugeben.

5. Kollisionsschutzvorrichtung (10) nach Anspruch 3 und 4,
**dadurch gekennzeichnet, dass**
in der Steuereinrichtung (12) ein erster Grenzwert (G1) und ein höherer zweiter Grenzwert (G2) für den Abstand (16) abgelegt sind, wobei die Steuereinrichtung (12) dazu ausgelegt ist,
falls der Abstand (16) den zweiten Grenzwert (G2) unterschreitet, das Warnsignal (19) auszugeben und
falls der Abstand (16) den ersten Grenzwert (G1) unterschreitet, die Steuerbefehle (17) zum Anhalten der Öffnungsbewegung auszugeben.

6. Kollisionsschutzvorrichtung (10) nach einem der vorhergehenden Ansprüche,
**dadurch gekennzeichnet, dass**
die Steuereinrichtung (12) dazu ausgelegt ist, eine Eingabe, die eine Bedienperson an einer Bedieneinrichtung (13) vornimmt, zu empfangen und nach Empfangen der Eingabe die zuvor angehaltene Öffnungsbewegung der Klappe (2) fortzusetzen, insbesondere unabhängig von den Sensorsignalen fortzusetzen.

7. Klappe (2) für ein Kraftfahrzeug (1), mit einer Kollisionsschutzvorrichtung (10) nach einem der vorhergehenden Ansprüche.

8. Klappe (2) nach Anspruch 7,
**dadurch gekennzeichnet, dass**
an der Klappe (2) zumindest ein Teil (7) einer Leuchte (5), insbesondere einer Heckleuchte, des Kraftfahrzeugs (1) angeordnet ist und der Sensor (15) in das klappenseitige Teil (7) der Leuchte (5) integriert und hierbei hinter einer Abdeckung (8) der Leuchte (5) angeordnet ist.

9. Klappe (2) nach Anspruch 7 oder 8,
**dadurch gekennzeichnet, dass**
die Klappe (2) eine Heckklappe des Kraftfahrzeugs (1) ist.

10. Klappe (2) nach einem der Ansprüche 8 bis 9,
**dadurch gekennzeichnet, dass**
der Sensor (15) eine Erfassungsrichtung aufweist, welche unter einem Winkel von 80° bis 100° zu einer Oberfläche der Klappe (2), insbesondere zu der Abdeckung (8) der Leuchte (5), verläuft.

11. Kraftfahrzeug (1), insbesondere Personenkraftwagen, mit einer Klappe (2) nach einem der Ansprüche 7 bis 10.

12. Verfahren zur Vermeidung einer Kollision einer schwenkbaren Klappe (2) eines Kraftfahrzeugs (1) mit einem Hindernis (33) während einer Öffnungsbewegung der Klappe (2), wobei mittels zumindest eines Sensors (15) das Hindernis (33) in einem Schwenkbereich (4) der Klappe (2) detektiert wird und abhängig von Sensorsignalen des zumindest einen Sensors (15) Steuerbefehle (17) zum Anhalten der Öffnungsbewegung der Klappe (2) mittels einer Steuereinrichtung (12) ausgegeben werden,
**dadurch gekennzeichnet, dass**
die Sensorsignale mittels eines optischen Sichtweitensensors (15) bereitgestellt werden,
welcher zusätzlich zur Detektion eines Hindernisses in dem Schwenkbereich (4) der Klappe (2) auch zur Erfassung einer optischen, d.h. meteorologischen Sichtweite in einer Umgebumg (20) des Kraftfahrzeuges (1) verwendet wird und, wobei mit einer internen Recheneinheit des Sensors (15) die empfangenen Infrarotsignale ausgewertet werden und die optische Sichtweite abhängig von den empfangenen Infrarotsignalen bestimmt wird.

## Claims

1. A collision protection device (10) for a pivotable hatch (2) of a motor vehicle (1), comprising at least one sensor (15) for detecting an obstacle (33) in a pivoting range (4) of the hatch (2), and comprising a control device (12), which is designed to output control commands (17) for stopping an opening movement of the hatch (2) depending on sensor signals of the at least one sensor (15),
**characterized in that**
the at least one sensor (15) is an optical visibility range sensor, which comprises an infrared transmitter (50) and at least one infrared receiver (21) and which is also formed for capturing an optical, i.e. meteorological visibility range in an environment (20) of the sensor (15) in addition to the detection of an obstacle in the pivoting range (4) of the hatch (2), wherein the sensor (15) includes an internal computing unit, which is formed for evaluating the received infrared signals and for determining the optical visibility range depending on the received infrared signals.

2. The collision protection device (10) according to claim 1,
**characterized in that**
the control device (12) is formed for automatically controlling the opening movement while emitting control signals to an actuator (11).

3. The collision protection device (10) according to claim 1 or 2,
**characterized in that**
the sensor (15) is formed for capturing a distance (16) to the obstacle (33) and the control device (12) is designed to output the control commands (17) for stopping the opening movement if the distance (16) falls below a preset limit value (G1).

4. The collision protection device (10) according to any one of the preceding claims,
**characterized in that**
the control device (12) is designed to output an acoustic and/or optical warning signal (19) by means of an output device (18) depending on sensor signals of the at least one sensor (15).

5. The collision protection device (10) according to claim 3 and 4,
**characterized in that**
a first limit value (G1) and a higher second limit value (G2) for the distance (16) are stored in the control device (12), wherein the control device (12) is designed
to output the warning signal (19) if the distance (16) falls below the second limit value (G2), and
to output the control commands (17) for stopping the opening movement if the distance (16) falls below the first limit value (G1).

6. The collision protection device (10) according to any one of the preceding claims,
**characterized in that**
the control device (12) is designed to receive an input, which an operator performs at an operating device (13), and to continue the previously stopped opening movement of the hatch (2) after receiving the input, in particular to continue it independently of the sensor signals.

7. A hatch (2) for a motor vehicle (1) comprising a collision protection device (10) according to any one of the preceding claims.

8. The hatch (2) according to claim 7,
**characterized in that**
at least a part (7) of a light (5), in particular of a taillight, of the motor vehicle (1) is arranged at the hatch (2) and the sensor (15) is integrated in the hatch-side part (7) of the light (5) and herein is arranged behind a cover (8) of the light (5).

9. The hatch (2) according to claim 7 or 8,
**characterized in that**
the hatch (2) is a tailgate of the motor vehicle (1).

10. The hatch (2) according to any one of claims 8 to 9,
**characterized in that**
the sensor (15) has a capturing direction, which extends at an angle of 80° to 100° to a surface of the hatch (2), in particular to the cover (8) of the light (5).

11. A motor vehicle (1), in particular passenger car, comprising a hatch (2) according to any one of claims 7 to 10.

12. A method for avoiding a collision of a pivotable hatch (2) of a motor vehicle (1) with an obstacle (33) during an opening movement of the hatch (2), wherein the obstacle (33) is detected in a pivoting range (4) of the hatch (2) by means of at least one sensor (15) and control commands (17) for stopping the opening movement of the hatch (2) are output by means of a control device (12) depending on sensor signals of the at least one sensor (15),
**characterized in that**
the sensor signals are provided by means of an optical visibility range sensor (15),
which is also used for capturing an optical, i.e. meteorological visibility range in an environment (20) of the motor vehicle (1) in addition to the detection of an obstacle in the pivoting range (4) of the hatch (2), and wherein the received infrared signals are evaluated by an internal computing unit of the sensor (15) and the optical visibility range is determined depending on the received infrared signals.

## Revendications

1. Arrangement de protection contre les collisions (10) pour un volet (2) pivotant d'un véhicule automobile (1), comprenant au moins un capteur (15) destiné à la détection d'un obstacle (33) dans une plage de pivotement (4) du volet (2), et comprenant un dispositif de commande (12) qui est conçu pour délivrer, en fonction de signaux de capteur de l'au moins un capteur (15), des instructions de commande (17) destinées à stopper le mouvement d'ouverture du volet (2),
**caractérisé en ce que**
l'au moins un capteur (15) est un capteur de portée visuelle optique qui possède un émetteur d'infrarouges (50) et au moins un récepteur d'infrarouges (21) et qui, en plus de la détection d'un obstacle dans la plage de pivotement (4) du volet (2), est également conçu pour l'acquisition d'une portée visuelle optique, c'est-à-dire météorologique, dans un environnement (20) du capteur (15), le capteur (15) contenant une unité de calcul interne qui est configurée pour l'interprétation des signaux infrarouges reçus et pour la détermination de la portée visuelle optique en fonction des signaux infrarouges reçus.

2. Arrangement de protection contre les collisions (10) selon la revendication 1, **caractérisé en ce que** le dispositif de commande (12) est configuré pour la commande automatique du mouvement d'ouverture en délivrant des signaux de commande à un actionneur (11).

3. Arrangement de protection contre les collisions (10) selon la revendication 1 ou 2, **caractérisé en ce que** le capteur (15) est configuré pour détecter une distance (16) par rapport à l'obstacle (33) et le dispositif de commande (12) est conçu pour délivrer les instructions de commande (17) destinées à stopper le mouvement d'ouverture lorsque la distance (16) devient inférieure à une valeur limite (G1) prédéfinie.

4. Arrangement de protection contre les collisions (10) selon l'une des revendications précédentes, **caractérisé en ce que** le dispositif de commande (12) est conçu pour délivrer un signal d'alerte (19) sonore et/ou visuel au moyen d'un dispositif de sortie (18) en fonction de signaux de capteur de l'au moins un capteur (15).

5. Arrangement de protection contre les collisions (10) selon les revendications 3 et 4, **caractérisé en ce qu'**une première valeur limite (G1) et une deuxième valeur limite (G2), plus élevée, pour la distance (16) sont enregistrées dans le dispositif de commande (12), le dispositif de commande (12) étant conçu pour délivrer le signal d'alerte (19) dans le cas où la distance (16) devient inférieure à la deuxième valeur limite (G2) et
délivrer les instructions de commande (17) destinées à stopper le mouvement d'ouverture dans le cas où la distance (16) devient inférieure à la première valeur limite (G1).

6. Arrangement de protection contre les collisions (10) selon l'une des revendications précédentes, **caractérisé en ce que** le dispositif de commande (12) est conçu pour recevoir une saisie qu'une personne effectue sur un dispositif de conduite (13) et, après la réception de la saisie, poursuivre le mouvement d'ouverture du volet (2) préalablement stoppé, notamment indépendamment des signaux de capteur.

7. Volet (2) pour un véhicule automobile (1), comprenant un arrangement de protection contre les collisions (10) selon l'une des revendications précédentes.

8. Volet (2) selon la revendication 7, **caractérisé en ce qu'**au moins une partie (7) d'un feu (5), notamment d'un feu arrière, du véhicule automobile (1) est disposée sur le volet (2) et le capteur (15) est intégré dans la partie (7) côté volet du feu (5) et est ici disposé derrière un élément de recouvrement (8) du feu (5).

9. Volet (2) selon la revendication 7 ou 8, **caractérisé en ce que** le volet (2) est un hayon du véhicule automobile (1) .

10. Volet (2) selon l'une des revendications 8 et 9, **caractérisé en ce que** le capteur (15) possède une direction de détection qui s'étend selon un angle de 80° à 100° par rapport à une surface du volet (2), notamment par rapport à l'élément de recouvrement (8) du feu (5).

11. Véhicule automobile (1), notamment voiture de tourisme, comprenant un volet (2) selon l'une des revendications 7 à 10.

12. Procédé pour éviter une collision d'un volet (2) pivotant d'un véhicule automobile (1) avec un obstacle (33) pendant un mouvement d'ouverture du volet (2), l'obstacle (33) étant détecté au moyen d'au moins un capteur (15) dans une plage de pivotement (4) du volet (2), et des instructions de commande (17) destinées à stopper le mouvement d'ouverture du volet (2) étant délivrées au moyen d'un dispositif de commande (12) en fonction de signaux de capteur de l'au moins un capteur (15),
**caractérisé en ce que**
les signaux de capteur sont fournis au moyen d'un capteur de portée visuelle optique (15),
lequel, en plus de la détection d'un obstacle dans la plage de pivotement (4) du volet (2), est également utilisé pour l'acquisition d'une portée visuelle optique, c'est-à-dire météorologique, dans un environnement (20) du véhicule automobile (1), les signaux infrarouges reçus étant interprétés avec une unité de calcul interne du capteur (15) et la portée visuelle optique étant déterminée en fonction des signaux infrarouges reçus.
